# FASCICULE DE BREVET EUROPEEN

(11) **EP 1 121 242 B1**
(45) Date de publication et mention de la délivrance du brevet: **05.02.2003**
(21) Numéro de dépôt: 99950692.6
(22) Date de dépôt: 11.10.1999
(51) Int. Cl.: B29D 30/20

(54) **PROCEDE DE FABRICATION D'UN PNEUMATIQUE SANS TRINGLE**
VERFAHREN ZUR HERSTELLUNG EINES KERNLOSEN LUFTREIFENS
METHOD FOR MAKING A TYRE WITHOUT TYRE BEAD CORE

(30) Priorité: 16.10.1998 FR 9813052
(43) Date de publication de la demande: 08.08.2001
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: BESTGEN, Luc, F-63140 Chatel Guyon (FR); AHOUANTO, Michel, F-63530 Enval (FR)
(74) Mandataire: Diernaz, Christian
(86) Numéro de dépôt international: EP9907599
(87) Numéro de publication internationale: WO00023260

(56) Documents cités:
- EP-A- 0 672 547
- DE-A- 2 430 495
- GB-A- 2 276 357
- US-A- 2 966 933

## Description

L'invention concerne la fabrication d'un pneumatique dont les bourrelets sont dépourvus de tringles en tant que moyen de reprise des efforts de tension de l'armature de carcasse et moyen de serrage desdits bourrelets sur les sièges de jante sur lesquels les dits bourrelets seront montés.

La demande FR 2 717 425 de la demanderesse décrit un pneumatique, à armature de carcasse radiale s'étendant d'un bourrelet à l'autre, surmontée radialement d'une armature de sommet elle-même surmontée d'une bande de roulement, caractérisé en ce que chaque bourrelet, dépourvu de tringle, comporte d'une part un élément annulaire dont la résistance à la traction dans le sens circonférentiel est notablement inférieure à celle qui serait nécessaire pour une tringle dans une enveloppe connue de même dimension, l'axe de cet élément annulaire étant l'axe de révolution de l'enveloppe, et d'autre part une armature de renforcement de bourrelet d'au moins deux couches de renfort au contact ou à proximité de l'élément annulaire, les dites couches de renfort comportant chacune des éléments de renforcement parallèles entre eux dans chaque couche, croisés d'une couche à la couche adjacente en formant avec la direction circonférentielle un angle β tel que 0 < β ≤ 10°, l'ensemble de ces couches ayant une résistance à la rupture en traction au moins égale à celle qui serait nécessaire pour une tringle dans une enveloppe connue de même dimension. La résistance mécanique de l'armature de renforcement de bourrelet est donc la contribution essentielle à la résistance mécanique de l'ensemble renforçant de bourrelet constitué par l'élément annulaire et ladite armature, cet ensemble permettant ainsi de remplacer la tringle d'une enveloppe classique. L'armature de carcasse s'enroule autour de l'élément annulaire, et les couches de renfort ont leurs extrémités radialement supérieures disposées dans le bourrelet à des hauteurs différentes.

Le complexe formé par les deux couches de l'armature de renforcement de bourrelet et éventuellement par l'élément annulaire, destiné à faciliter la fabrication d'un tel complexe et en conséquence du pneumatique, est réalisé lors de ladite confection d'ébauche sur le tambour du même nom.

Quelle que soit la méthode ou procédé employé, la nécessité d'avoir dans le pneumatique vulcanisé des angles d'éléments de renforcement compris entre 0° et 10°, et préférentiellement 5° et moins, conduit à des difficultés sérieuses lors de la coupe aux angles voulus des nappes d'éléments de renforcement non vulcanisées, aussi bien que lors de l'aboutage des laizes obtenues, difficultés pouvant avoir pour conséquence un manque de précision dans la disposition des couches de renfort les unes par rapport aux autres, mais aussi par rapport aux produits avoisinants les dites couches. Les dites difficultés sont aussi la cause de pertes de temps non négligeables dans le processus industriel et d'un coût de fabrication plus élevé.

Afin de remédier à cet état de fait, l'invention propose, pour la fabrication d'un pneumatique à armature de carcasse radiale allant d'un bourrelet à l'autre et avec des bords repliés pour former des retournements d'armature de carcasse, chaque bourrelet étant dépourvu de tringle et renforcé par un complexe de couches axialement adjacentes d'éléments de renforcement faisant avec la direction circonférentielle un angle β tel que 0° < β ≤ 10°, l'armature de carcasse s'enroulant autour dudit complexe pour former un retournement d'armature de carcasse, un procédé caractérisé en ce que le complexe de couches axialement adjacentes est fabriqué séparément de l'ébauche d'armature de carcasse, ladite fabrication comprenant les étapes suivantes :
a) poser au moins une nappe d'éléments de renforcement orientés à un angle α, tel que α ≥ 10°, sur un tambour de pose de rayon R,
b) étendre ladite nappe par augmentation du rayon de tambour à une valeur R₁ supérieure à R,
c) former un manchon cylindrique de deux couches d'éléments croisés d'une couche à la suivante, avec un angle α ≥ 10°,
d) augmenter une deuxième fois le rayon du tambour de pose à un rayon R₂ tel que l'on obtienne par effet pantographique l'angle β final des éléments de renforcement,
e) terminer la confection du complexe de couches adjacentes,
f) sortir le complexe terminé de son tambour de pose et à le poser à l'endroit désiré sur le tambour de confection de l'ébauche cylindrique d'armature de carcasse.

La formation du manchon de deux couches d'éléments croisés peut être avantageusement réalisée de deux manières :
- soit la première étape de fabrication consiste à poser une seule nappe d'éléments parallèles orientés avec l'angle α, et la formation de deux couches croisées peut se faire par repliement d'une partie de la nappe sur l'autre partie de ladite nappe,
- soit la première étape consiste à poser deux nappes indépendamment l'une de l'autre sur deux tambours de pose indépendants de rayons R et R', pour tenir compte de l'épaisseur d'une nappe, et à les étendre à des rayons R₁ et R'₁, la formation de deux couches pouvant se faire par superposition sur le tambour de rayon R₁.

Dans le premier cas ci-dessus, le repliement de la nappe sur elle-même étant réalisé, l'augmentation du rayon du tambour à la valeur R₂ permettant de parvenir à l'angle final β, on obtient de manière directe un complexe formé de deux couches repliées d'éléments croisés.

Dans le deuxième cas de figure, la pose et la superposition de deux nappes sur le tambour de rayon R₁ étant réalisée, l'augmentation du rayon à la valeur R₂ permettant de parvenir à l'angle final β, on obtient de manière directe un complexe formé de deux couches non repliées d'éléments croisés, mais on peut aussi terminer la confection d'un complexe de quatre couches repliées par le moyen du repliement des deux nappes d'éléments croisés à angle β sur elles-mêmes.

Le repliement d'une ou de plusieurs nappes sur elles-mêmes peut se faire sans ou avec l'appoint d'un anneau circulaire, que ledit repliement soit réalisé dans le cas du rayon R₁ ou qu'il soit réalisé dans le cas du rayon R₂. Dans le premier cas de figure, ledit anneau circulaire est alors doté d'un faible module d'extension pour une certaine plage d'allongement relatif ε₀ et d'un fort module pour les valeurs d'allongement relatif en dehors de la limite supérieure de ladite plage, l'allongement relatif ε₀ correspondant au passage du rayon R₁ au rayon R₂ et est égal à R₂ - R₁/R₁. Dans le deuxième cas de figure, l'anneau circulaire est inextensible.

L'invention sera mieux comprise à l'aide du dessin annexé à la description illustrant à titre non limitatif des exemples d'exécution, dessin où l'on voit :
- sur les figures 1A à 1H, le schéma des différentes étapes de fabrication d'un complexe utilisé dans un pneumatique,
- sur les figures 2A à 2D, une variante du procédé conforme à l'invention,
- sur les figures 3A à 3C, une deuxième variante du procédé, en partie,
- sur les figures 4A à 4D, une troisième variante mettant en jeu un anneau circulaire.

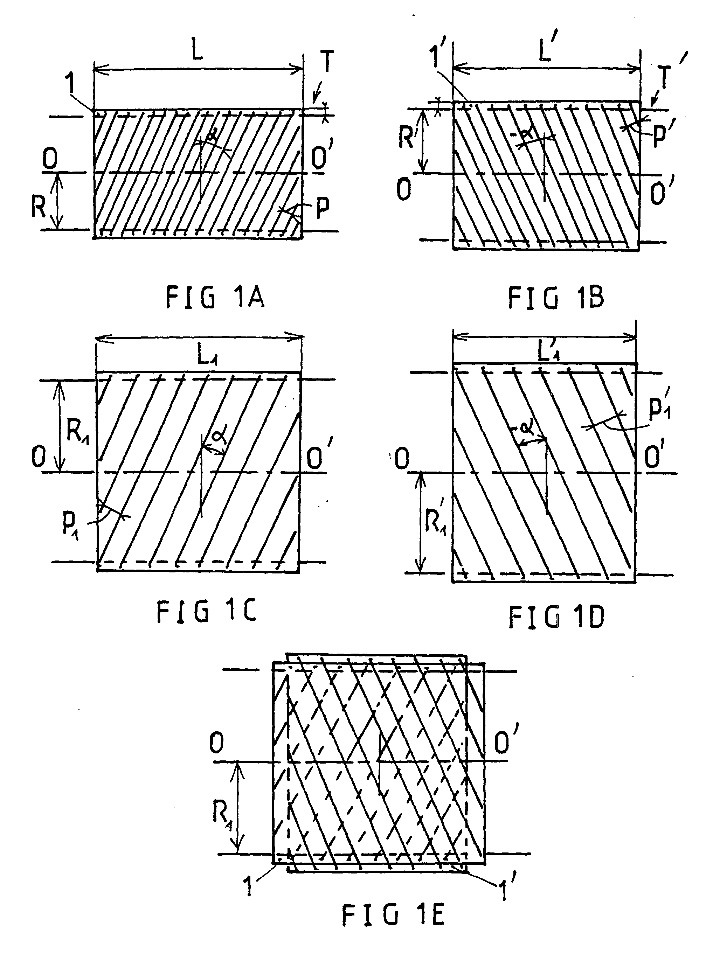

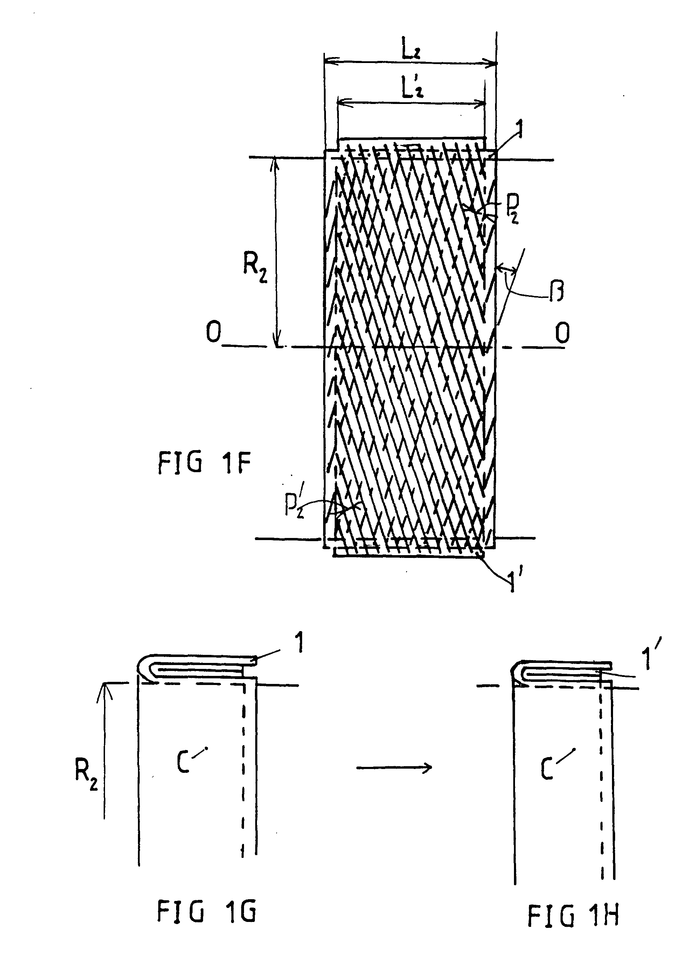

En vue de fabriquer un complexe, tel que décrit ci-dessus, pour un pneumatique de dimension 175/70.R.13, on pose sur le tambour cylindrique expansible T, d'axe OO' et de rayon R égal à 163 mm (tambour représenté schématiquement sur la figure 1A), une nappe (1) formée de câbles textiles en polyamide aromatique, à raison d'une densité de 80 fils par dm correspondant à un pas p de 1,25 mm entre câbles, les dits câbles faisant avec la direction circonférentielle un angle + α de 10° et étant calandrés avec un mélange caoutchouteux adapté. Ladite nappe a une largeur axiale L égale à 86 mm et une épaisseur radiale totale e, calandrage compris, égale à 1 mm.

Sur un tambour T' (figure 1B), du même type que le tambour T, est posée une deuxième nappe (1') formée des mêmes câbles que ceux de la nappe (1), calandrés avec le même mélange caoutchouteux et étant distants axialement les uns des autres du même pas p' de 1,25 mm. Les dits câbles font avec la direction circonférentielle le même angle α en valeur absolue mais de direction opposée -α à la direction des câbles de la nappe (1). Pour tenir compte de l'épaisseur e' de 1 mm de la nappe (1') identique à l'épaisseur e de la nappe (1), ladite nappe (1') est posée sur le tambour T' de rayon R' égal à 164 mm. Ladite nappe (1') a une largeur axiale L' de 66 mm.

Les deux tambours T et T' (figures 1C et 1D) voient leurs rayons R et R' respectivement portés aux valeurs R₁ et R'₁ respectivement égales à 326 et 327 mm. L'extension des nappes des rayons R et R' aux rayons R₁ et R'₁ ne modifie pas sensiblement leurs largeurs respectives L et L', qui restent pratiquement égales à 86 mm et 66 mm, et ne modifie pas sensiblement les angles des câbles qui restent pratiquement égaux à + α et - α. Par contre ladite extension modifie la valeur des pas entre câbles qui augmentent des valeurs p et p' aux valeurs p₁ et p'₁, tel que les rapports p₁/p et p'₁/p' soient égaux entre eux et au rapport R₁/R. De même les épaisseurs de nappes, respectivement e et e', deviennent telles que e₁/e et e'₁/e' soient égaux à R/R₁.

Les deux nappes (1) et (1') sous forme d'anneaux cylindriques de rayons intérieurs R₁ et R'₁ sont alors transférés et réunies (figure 1E) sur un même tambour T, la nappe (1') étant superposée radialement à la nappe (1) de manière à obtenir un manchon cylindrique formée de deux nappes (1) et (1') dont les câbles sont parallèles entre eux dans chaque nappe et croisés d'une nappe à la suivante en formant un angle α avec la direction circonférentielle.

Il est évident que la manipulation des deux nappes (1) et (1') à l'état non vulcanisé sur les deux tambours T et T' et leur réunion sur un même tambour demande un certain nombre de précautions et en particulier d'enduire les dites nappes d'un produit anticollant, si nécessaire.

Le manchon cylindrique formée par les deux nappes (1) et (1') de rayon intérieur R₁ subit alors une extension de sorte que la valeur de rayon R₁ soit portée à la valeur R₂ égale à 331mm (figure 1F), et tel que, par effet pantographique, les angles + α et - α décroissent pour devenir les angles + β et - β égaux à 5°, tel que les largeurs axiales L₁ et L'₁ des deux nappes (1) et (1') diminuent fortement pour devenir L₂ et L'₂ respectivement égales à 43 et 33 mm.

Les pas p₂ et p'₂ sont par contre nettement inférieurs aux pas p₁ et p'₁ puisque l'on obtient une valeur sensiblement égale à 0,96 mm pour p₂ et p'₂ au lieu de 1,92 mm pour les deux pas p₁ et p'₁. Les épaisseurs des nappes (1) et (1'), initialement égales à 1 mm, fortement réduites lors de l'extension aux rayons R₁ et R'₁, redeviennent sensiblement égales à 1 mm lors de l'extension du manchon des deux nappes au rayon R₂, ledit rayon R₂ étant égal ou légèrement inférieur au rayon de l'extrémité radialement intérieure du complexe de couches à l'état vulcanisé, complexe remplaçant la tringle et la nappe de renforcement usuellement employées.

La fabrication du complexe désiré se termine, dans le cas décrit, par le repliement des deux nappes (1) et (1') sur elles-mêmes, tel que montré sur la figure 1G, pour obtenir à l'état non vulcanisé le complexe C tel qu'il apparaît sur le pneumatique vulcanisé, ledit complexe étant formé de quatre couches de câbles textiles croisés d'une nappe à la suivante en faisant avec la direction circonférentielle un angle sensiblement égal à 5°.

Les nappes (1) et (1') étant repliées, ledit complexe est alors évacué du tambour T et transféré à l'endroit voulu sur le tambour de confection de l'ébauche crue et cylindrique d'armature de carcasse. Ladite armature de carcasse est retournée autour dudit complexe C, et après finition de ladite ébauche crue, cette derrière est transformée en ébauche torique sous l'effet de la pression interne de la membrane de conformation du tambour de confection. Le complexe C prend alors une position sensiblement verticale avec modifications des angles de pose suivant le rayon de parallèle considéré.

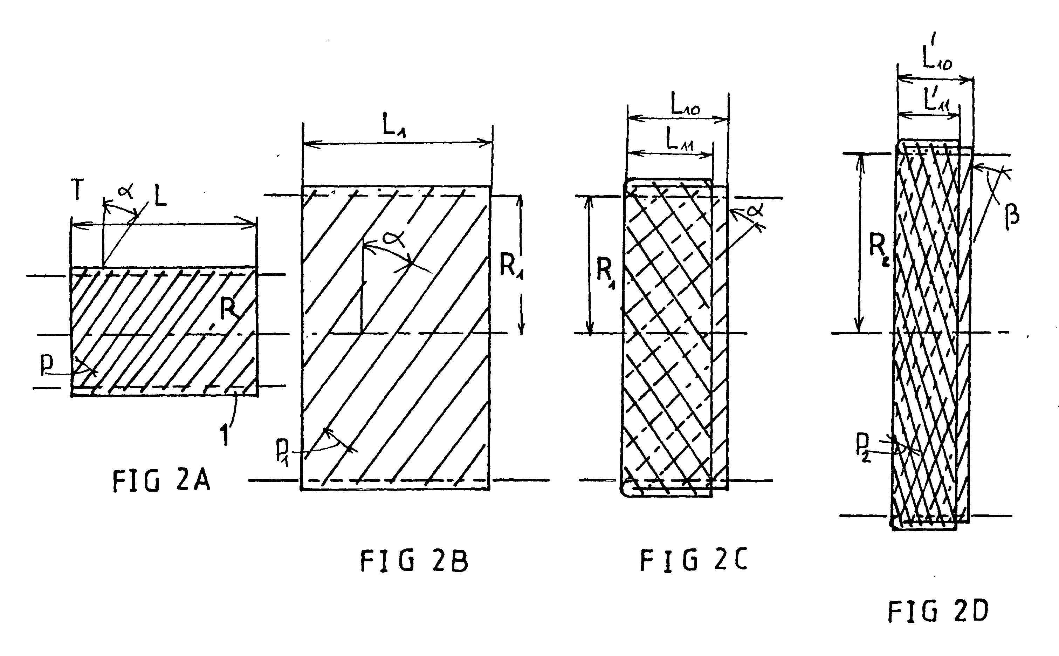

La figure 2 montre un mode de fabrication simplifié pour obtenir un complexe C à deux couches, les dites deux couches étant obtenues par repliement d'une nappe sur elle-même. La nappe (1) de caractéristiques identiques à la nappe (1) précédemment décrite ci-dessus est posée (figure 2A) sur le tambour de rayon R. La nappe (1) est alors étendue (figure 2B) de manière à ce que son rayon intérieur devienne R₁, la largeur L initiale et l'angle α de ses câbles de renforcement ne variant pas au cours de l'opération d'extension. Ladite nappe est repliée sur elle-même (figure 2C), l'opération de repliement s'effectuant sur le tambour T, de manière à obtenir deux couches de largeurs axiales L₁₀ et L₁₁, la largeur L₁₀ de la couche radialement intérieure étant supérieure à la largeur L/2 et la largeur L₁₁ de la couche radialement supérieure étant inférieure à L/2. Les deux couches étant superposées, le rayon R₁ du tambour de pose T est augmenté jusqu'à la valeur R₂ (figure 2D), opération permettant d'obtenir l'angle final β des câbles croisés des deux couches formant le complexe C à l'état non vulcanisé, le rayon R₂ étant, dans ce cas aussi, légèrement supérieur au rayon de l'extrémité dudit complexe dans le pneumatique vulcanisé, extrémité radialement la plus proche de l'axe de rotation dudit pneumatique.

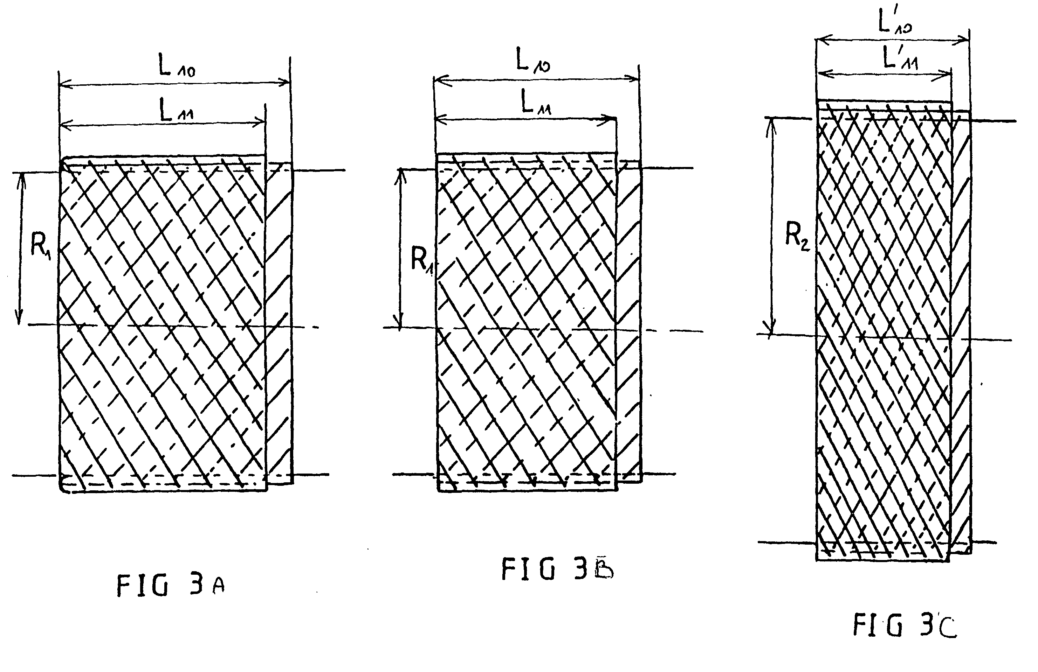

Le mode de fabrication, dont les étapes sont représentées en partie sur la figure 3, est un mode dérivé de celui représenté sur la figure 2 et destiné à obtenir soit un complexe à deux couches non repliées, soit un complexe à quatre couches à partir de deux nappes repliées sur elles-mêmes. Les étapes préliminaires (non représentées) dudit mode sont les mêmes que les étapes 2A à 2C du mode représenté sur la figure 2. Le manchon cylindrique formé de deux couches, obtenues par repliement sur le tambour T de rayon R₁ d'une nappe (1) d'éléments de renforcement orientés à l'angle α, au pas p₁ et dont les largeurs L₁₀ et L₁₁ ont des valeurs de part et d'autre de la valeur L₁/2, est amputé de son retournement par coupe du bord dudit retournement (figure 3A) de manière à former un manchon cylindrique de deux couches à extrémités libres (figure 3B), manchon qui est dans la même configuration que le manchon de la figure 1E du premier exemple décrit, avec l'avantage d'avoir été obtenu par l'utilisation d'un seul tambour et non de deux tambours. La coupe du retournement s'opère par les moyens connus, qu'ils soient classiques comme les cisailles et/ou couteaux droits ou circulaires, ou qu'ils soient plus évolués tels que les jets d'eau ou le rayon laser. Ledit manchon est alors traité de la même manière que précédemment, c'est-à-dire étendu (figure 3C) à un rayon R₂ pour parvenir à l'angle, le pas, et les largeurs voulus. Il peut rester tel quel et former à l'état vulcanisé dans le pneumatique un complexe C à deux couches non repliées, ou alors subir les opérations tels que montrées sur les figures 1G à 1H et conduire à l'état vulcanisé à un complexe C de quatre couches repliées.

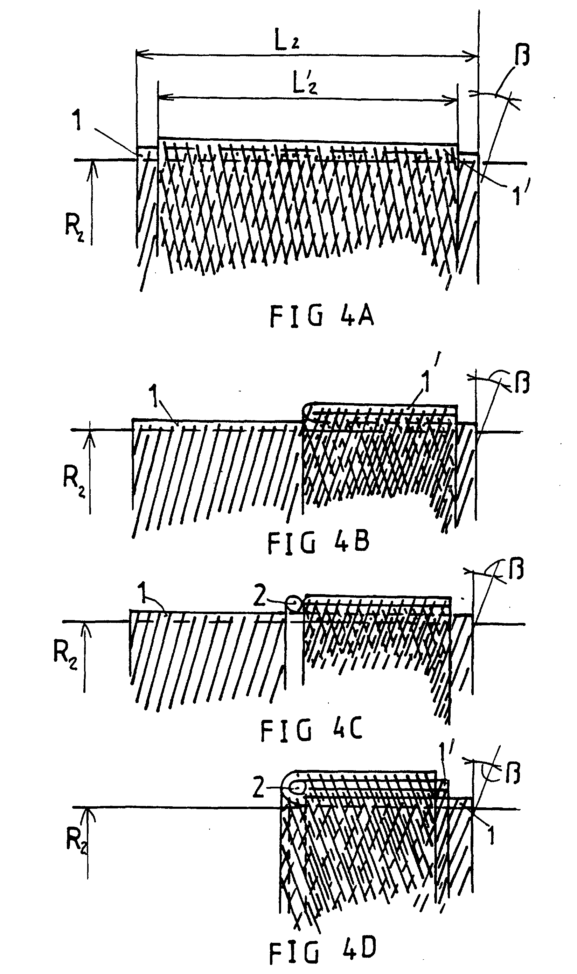

Les repliements de nappe(s) sur elle(s)-même(s) peuvent se réaliser simplement ou avec l'appoint d'un anneau circulaire. La figure 4 montre un exemple de repliement de deux nappes (1) et (1') formant un manchon cylindrique de rayon R₂, les deux nappes étant composées de câbles textiles orientés avec l'angle β, parallèles entre eux dans une nappe avec un pas unique p₂ et de largeurs respectives L₂ et L'₂ (figure 4A). La finition du manchon pour obtenir un complexe à quatre couches est réalisée par :
* le repliement sur elle-même de la nappe (1') la plus éloignée de l'axe du tambour T (figure 4B),
* puis par la pose axialement à l'extérieur du retournement de la nappe (1') de l'anneau circulaire (2) (figure 4C),
* par enfin le repliement, autour de l'anneau (2) et du retournement de la nappe (1'), de la nappe (1) (figure 4D).

Ainsi le procédé conforme à l'invention, du fait de la présence de l'étape de préextension à un rayon R₁ permettant l'agrandissement du pas entre éléments de renforcement, permet de couper des nappes dont les éléments présentent des angles conséquents et de travailler des nappes non vulcanisées d'épaisseur initiale correcte et un pas initial suffisant pour assurer aux dites nappes une résistance telle qu'elles puissent être manipulées individuellement sans risque de déchirures par exemple entre éléments de renforcement. L'extension au rayon R₂ conduit à l'obtention de couches d'éléments croisés avec des pas entre éléments et des épaisseurs les plus faibles possibles à l'état vulcanisé.

## Revendications

1. Procédé pour la fabrication d'un pneumatique à armature de carcasse radiale allant d'un bourrelet à l'autre et avec des bords repliés pour former des retournements d'armature de carcasse, chaque bourrelet étant dépourvu de tringle et renforcé par un complexe C de couches axialement adjacentes d'éléments de renforcement faisant avec la direction circonférentielle un angle β tel que 0° < β ≤ 10°, l'armature de carcasse s'enroulant autour dudit complexe pour former un retournement d'armature de carcasse, **caractérisé en ce que** le complexe C de couches axialement adjacentes est fabriqué séparément de l'ébauche d'armature de carcasse, ladite fabrication comprenant les étapes suivantes :
a) poser au moins une nappe (1) d'éléments de renforcement orientés à un angle α, tel que α ≥ 10°, sur un tambour de pose T de rayon R,
b) étendre ladite nappe (1) par augmentation du rayon de tambour à une valeur R₁ supérieure à R,
c) former un manchon cylindrique de deux couches d'éléments croisés d'une couche à la suivante, avec un angle α ≥ 10°
d) augmenter une deuxième fois le rayon du tambour de pose à un rayon R₂ tel que l'on obtienne par effet pantographique l'angle β final des éléments de renforcement,
e) terminer la confection du complexe de couches adjacentes,
f) sortir le complexe terminé de son tambour de pose et à le poser à l'endroit désiré sur le tambour de confection de l'ébauche cylindrique d'armature de carcasse.

2. Procédé selon la revendication 1, **caractérisé en ce que** la formation du manchon de deux couches repliées d'éléments croisés est réalisée après la pose lors de 1a première étape sur un tambour de rayon R d'une seule nappe (1) d'éléments croisés orientés avec l'angle α, ladite pose étant suivie de l'extension de ladite nappe (1) à un rayon R₁, la formation de deux couches se faisant par repliement d'une partie de la nappe (1) sur l'autre partie de ladite nappe sur le tambour de rayon R₁.

3. Procédé selon la revendication 1, **caractérisé en ce que** la formation du manchon de deux couches non repliées d'éléments croisés est réalisée après la pose lors de la première étape de deux nappes (1) et (1') indépendamment l'une de l'autre sur deux tambours de pose indépendants de rayons R et R', ladite pose étant suivie d'une extension à des rayons R₁ et R'₁ pour tenir compte de l'épaisseur d'une nappe, la formation de deux couches se faisant par transfert et superposition d'une nappe (1') sur l'autre (1) sur le tambour de rayon R₁.

4. Procédé selon la revendication 1, **caractérisé en ce que** la formation du manchon de deux couches non repliées d'éléments croisés est réalisée après la pose lors de la première étape sur un tambour de rayon R d'une seule nappe (1) d'éléments croisés orientés avec l'angle α, ladite pose étant suivie de l'extension de ladite nappe (1) à un rayon R₁, la formation de deux couches non repliées se faisant par repliement d'une partie de la nappe (1) sur l'autre partie de ladite nappe sur le tambour de rayon R₁ et coupe du bord retourné ainsi obtenu.

5. Procédé pour obtenir un complexe à quatre couches repliées , **caractérisé en ce que** l'on forme un manchon à deux couches non repliées selon la revendication 3, la finition du complexe étant obtenue par repliement des deux couches ayant été étendues de manière à ce que le rayon interne dudit manchon soit devenu égal à R₂.

6. Procédé pour obtenir un complexe à quatre couches repliées , **caractérisé en ce que** l'on forme un manchon à deux couches non repliées selon la revendication 4, la finition du complexe étant obtenue par repliement des deux couches ayant été étendues de manière à ce que le rayon interne dudit manchon soit devenu égal à R₂.

7. Procédé selon l'une des revendications 5 ou 6, **caractérisé en ce que** le repliement d'au moins une des couches est réalisé avec l'appoint et autour d'un anneau circulaire (2) posé sur ladite couche.

## Patentansprüche

1. Verfahren zur Herstellung eines Luftreifens mit von einem Wulst zum anderen verlaufender, radialer Karkassenbewehrung und mit umgefalteten Rändern, um Umschläge von Karkassenbewehrungen zu bilden, wobei jeder Wulst kernlos ist und von einem Komplex C aus axial benachbarten Schichten von Verstärkungselementen verstärkt wird, die mit der Umfangsrichtung einen Winkel β bilden, derart, daß 0° < β ≤ 10°, wobei die Karkassenbewehrung sich um den Komplex rollt, um einen Karkassenbewehrungsumschlag zu bilden, **dadurch gekennzeichnet, daß** der Komplex C von axial benachbarten Schichten getrennt vom Karkassenbewehrungsrohling hergestellt wird, wobei die Herstellung die folgenden Schritte aufweist:
a) Auflegen von mindestens einer Lage (1) von Verstärkungselementen, die mit einem Winkel α, wie z.B. α ≥ 10°, ausgerichtet sind, auf eine Verlegetrommel T mit einem Radius R,
b) Dehnen der Lage (1) durch Erhöhung des Trommelradius auf einen Wert R₁ größer als R,
c) Bilden einer zylindrischen Muffe aus zwei Schichten von Elementen, die sich von einer Schicht zur nächsten kreuzen, mit einem Winkel α ≥ 10°,
d) eine zweite Vergrößerung des Radius der Verlegetrommel auf einen Radius R₂, so daß durch pantographische Wirkung der Endwinkel β der Verstärkungselemente erhalten wird,
e) Beendigung der Anfertigung des Komplexes von benachbarten Schichten,
f) Entfernen des beendeten Komplexes aus seiner Verlegetrommel und Aufbringen an der gewünschten Stelle auf der Fertigungstrommel des zylindrischen Karkassenbewehrungsrohlings.

2. Verfahren nach Anspruch 1, **dadurch gekennzeichnet, daß** die Ausbildung der Muffe aus zwei umgefalteten Schichten von gekreuzten Elementen nach dem Auflegen, beim ersten Schritt, auf eine Trommel mit dem Radius R von einer einzigen Lage (1) aus gekreuzten Elementen, die mit dem Winkel α ausgerichtet sind, hergestellt wird, wobei das Auflegen vom Dehnen der Lage (1) auf einen Radius R₁ gefolgt wird, wobei die-Bildung von zwei Schichten durch Umfalten eines Teils der Lage (1) auf den anderen Teil der Lage auf der Trommel mit dem Radius R₁ erfolgt.

3. Verfahren nach Anspruch 1, **dadurch gekennzeichnet, daß** die Ausbildung der Muffe aus zwei nicht umgefalteten Schichten von gekreuzten Elementen nach dem Auflegen, beim ersten Schritt, von zwei Lagen (1) und (1') unabhängig voneinander auf zwei unabhängige Verlegetrommeln mit den Radien R bzw. R' hergestellt wird, wobei das Auflegen von einem Dehnen auf Radien R₁ bzw. R'₁ gefolgt wird, um die Dicke einer Lage zu berücksichtigen, wobei die Bildung von zwei Schichten durch Übertragung und Auflegen einer Lage (1') auf die andere (1) auf der Trommel mit dem Radius R₁ erfolgt.

4. Verfahren nach Anspruch 1, **dadurch gekennzeichnet, daß** die Ausbildung der Muffe aus zwei nicht umgefalteten Schichten von gekreuzten Elementen nach dem Auflegen, beim ersten Schritt, von einer einzigen Lage (1) von gekreuzten Elementen, die mit dem Winkel α ausgerichtet sind, auf eine Trommel mit dem Radius R erfolgt, wobei das Auflegen von der Dehnung der Lage (1) auf einen Radius R₁ gefolgt wird, wobei die Bildung von zwei nicht umgefalteten Schichten durch Umfalten eines Teils der Lage (1) auf den anderen Teil dieser Lage auf der Trommel mit dem Radius R₁ und Schneiden des so erhaltenen, umgeschlagenen Rands erfolgt.

5. Verfahren, um einen Komplex mit vier umgefalteten Schichten zu erhalten, **dadurch gekennzeichnet, daß** eine Muffe mit zwei nicht umgefalteten Schichten nach Anspruch 3 geformt wird, wobei die Endbearbeitung des Komplexes durch Umfalten der beiden Schichten erhalten wird, die so gedehnt wurden, daß der Innenradius der Muffe gleich R₂ geworden ist.

6. Verfahren, um einen Komplex mit vier umgefalteten Schichten zu erhalten, **dadurch gekennzeichnet, daß** eine Muffe mit zwei nicht umgefalteten Schichten nach Anspruch 4 geformt wird, wobei die Endbearbeitung des Komplexes durch Umfalten der beiden Schichten erhalten wird, die so gedehnt wurden, daß der Innenradius der Muffe gleich R₂ geworden ist.

7. Verfahren nach einem der Ansprüche 5 oder 6, **dadurch gekennzeichnet, daß** das Umfalten mindestens einer der Schichten mit Unterstützung eines und um einen kreisförmigen Ring (2) herum durchgeführt wird, der auf die Schicht auflegt ist.

## Claims

1. A process for the manufacture of a tyre with radial carcass reinforcement extending from one bead to the other and with edges folded over to form carcass reinforcement upturns, each bead being devoid of bead wire and reinforced by a complex C of axially adjacent layers of reinforcement elements which form an angle β with the circumferential direction such that 0° < β ≤ 10°, the carcass reinforcement winding around said complex to form a carcass reinforcement upturn, **characterised in that** the complex C of axially adjacent layers is manufactured separately from the carcass reinforcement blank, said manufacturing operation comprising the following steps:
a) laying at least one ply (1) of reinforcement elements oriented at an angle α, such that α ≥ 10°, on a laying drum T of radius R,
b) extending said ply (1) by increasing the drum radius to a value R₁ greater than R,
c) forming a cylindrical sleeve of two layers of elements crossed from one layer to the next, with an angle α ≥ 10°,
d) increasing for a second time the radius of the laying drum to a radius R₂ such that the final angle β of the reinforcement elements is obtained by pantograph effect,
e) finishing the building of the complex of adjacent layers,
f) removing the finished complex from its laying drum and laying it at the desired location on the building drum for the cylindrical carcass reinforcement blank.

2. A process according to Claim 1, **characterised in that** the formation of the sleeve of two folded-over layers of crossed elements is effected after the laying during the first step on a drum of radius R of a single ply (1) of crossed elements oriented at the angle α, said laying being followed [by] the extension of said ply (1) to a radius R₁, the two layers being formed by folding over part of the ply (1) on to the other part of said ply on the drum of radius R₁.

3. A process according to Claim 1, **characterised in that** the formation of the sleeve of two non-folded-over layers of crossed elements is effected after the laying during the first step of two plies (1 ) and (1') independently of each other on two independent laying drums of radii R and R', said laying being followed by extension to radii R₁ and R'₁ to make allowance for the thickness of one ply, the two layers being formed by transfer and superposition of one ply (1') on the other (1) on the drum of radius R₁.

4. A process according to Claim 1, **characterised in that** the formation of the sleeve of two non-folded-over layers of crossed elements is effected after the laying during the first step on a drum of radius R of a single ply (1) of crossed elements oriented at the angle α, said laying being followed by the extension of said ply (1) to a radius R₁, the two non-folded-over layers being formed by folding over part of the ply (1) on to the other part of said ply on the drum of radius R₁ and cutting the upturned edge thus obtained.

5. A process for obtaining a complex of four folded-over layers, **characterised in that** a sleeve of two non-folded-over layers is formed in accordance with Claim 3, the finishing of the complex being obtained by folding over the two layers having been extended so that the internal radius of said sleeve has become equal to R₂.

6. A process for obtaining a complex of four folded-over layers, **characterised in that** a sleeve of two non-folded-over layers is formed in accordance with Claim 4, the finishing of the complex being obtained by folding over the two layers having been extended so that the internal radius of said sleeve has become equal to R₂.

7. A process according to one of Claims 5 or 6, **characterised in that** the folding over of at least one of the layers is effected with the addition of and around a circular ring (2) laid on said layer.
